(19) Europäisches Patentamt
European Patent Office
Office européen des brevets

(11) **EP 2 838 211 A1**

## (12) EUROPEAN PATENT APPLICATION

(43) Date of publication:
**18.02.2015 Bulletin 2015/08**

(21) Application number: **13306151.5**

(22) Date of filing: **15.08.2013**

(51) Int Cl.:
*H04B 10/294* [(2013.01)]    *H04J 14/02* [(2006.01)]

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Zami, Thierry
91620 Nozay (FR)**

• **Bresson, Christine
91620 Nozay (FR)**
• **Rouvillain, Delphine
91620 Nozay (FR)**

(74) Representative: **Loyer & Abello
9, rue Anatole de la Forge
75017 Paris (FR)**

Remarks:
Amended claims in accordance with Rule 137(2)
EPC.

(54) **Filtering of a WDM optical signal with a configuration filter**

(57)    A method for filtering a WDM optical signal comprises:
- sending a WDM optical signal to a configurable filtering device that has a spectral granularity (20) and a plurality of configurable filter slot boundaries that are spaced from one another, wherein two adjacent filter slot boundaries are spaced by a filter slot width corresponding every time to an integer multiple of the spectral granularity (20), wherein the configurable filtering device is adapted to generate a plurality of optical filters each affecting a spectral slot defined between two adjacent filter slot boundaries, and
- configuring the filter slot boundaries of the filtering device so as to arrange a respective one of the filter slot boundaries within each unoccupied band between the occupied bands (2) of two adjacent spectral components (4) of the WDM optical.

FIG.4

EP 2 838 211 A1

## Description

## Field of the invention

The invention relates to the technical field of optical communications, and in particular to methods and devices for filtering WDM optical signals with configurable filters, especially when a mismatch exists between spectral granularities of the filters and channel spacing values of the WDM signals.

## Background

Within core and metropolitan optical networks, data are transmitted by optical signals aligned on regular grids of optical frequencies with regular channel spaces equal to 400 GHz, 200GHz, 100GHz or 50 GHz standardized by the international Telecommunication Union (ITU). The shortest channel spaces correspond to the higher spectral efficiencies and therefore make it possible to transport more capacity. Those channels spaces also correspond to the most detrimental physical degradations such as non-linear impairments during propagation along the optical fibers. Filtering and isolation issues also cause degradation of the optical signals in transparent optical network nodes. The grid standardization is convenient for the optical transparency because it makes it easier to transfer optical signals from network link to network link across the optical nodes in a transparent manner without costly conversion in the electronic domain.

The recent advent of coherent detection for high data rate transmission combined with the availability of bandwidth-agile Wavelength Selective Switches raised the interest for optical transmissions with non-standard channel spacing.

## Summary

In an embodiment, the invention provides a method for filtering a WDM optical signal, the method comprising:

- sending a WDM optical signal to a configurable filtering device,

wherein the WDM optical signal comprises a plurality of, e.g. at least five, adjacent spectral components, each spectral component having a central frequency arranged on a regular frequency grid and an occupied band, wherein a spectral width of the occupied band is smaller than the frequency grid spacing so as to leave an unoccupied band every time between the occupied bands of two adjacent spectral components of the WDM optical signal, wherein the configurable filtering device has a spectral granularity and a plurality of configurable filter slot boundaries that are spaced from one another, wherein two adjacent filter slot boundaries are spaced by a filter slot width corresponding every time to an integer multiple of the spectral granularity, wherein the frequency grid spacing of the regular frequency grid differs by more than 2% from any integer multiple of the spectral granularity, wherein the configurable filtering device is adapted to generate a plurality of optical filters each affecting a spectral slot defined between two adjacent filter slot boundaries, and - configuring the filter slot boundaries of the filtering device so as to arrange a respective one of the filter slot boundaries within each unoccupied band between the occupied bands of two adjacent spectral components of the WDM optical signal.

According to embodiments, such a method may comprise one or more of the features below.

In an embodiment, the method further comprises configuring an attenuation of each optical filter of the configurable filtering device so as to output the WDM optical signal with a substantially flat spectrum, e.g. with less than 0.5dB residual power divergence between the spectral components.

In an embodiment, the spectral granularity of the configurable filtering device is smaller than a difference between the frequency grid spacing and the spectral width of the occupied band. This dimensioning feature improves the likelihood that a suitable position of the boundary can be found between any two adjacent spectral components of the signal, i.e. any two wavelengths channels.

) In an embodiment, the method further comprises:

- sending the WDM optical signal to a second configurable filtering device connected in series with the first configurable filtering device, wherein the second configurable filtering device has a spectral granularity, e. g. the same spectral granularity as the first configurable filtering device, and a plurality of configurable filter slot boundaries that are spaced from one another, wherein two adjacent filter slot boundaries are spaced by a filter slot width corresponding every time to an integer multiple of the spectral granularity, wherein the configurable filtering device is adapted to generate a second plurality of optical filters each affecting a spectral slot defined between two configurable filter slot boundaries, and
- configuring the filter slot boundaries of the second filtering device so as to arrange a respective one of the filter slot boundaries within each unoccupied band between the occupied bands of two adjacent spectral components of the WDM optical signal, wherein at least one filter slot boundary of the second filtering device is arranged within an unoccupied band at a different frequency from the filter slot boundary of the first filtering device arranged within the same unoccupied band.

By cascading several configurable filters in this manner, it is possible to improve a spectral flatness of the final signal. By shifting the filter slots from one device to the following, a statistical quality of the optical signal can be improved by mitigating spectrally-localized impairments that may be created close to the filter slot boundaries,

In an embodiment, at least one unoccupied band has a larger width than the spectral granularity, wherein the filter slot boundary of the second filtering device arranged within the unoccupied band is shifted by an integer multiple of the spectral granularity with respect to the filter slot boundary of the first filtering device arranged within the unoccupied band.

In an embodiment, the configurable filtering device comprises a Wavelength Selective Switch (WSS) comprising a liquid-crystal display device arranged as controlled light-switching element. WSS technology based on liquid-crystal matrices provides reliable configurable filters with relatively narrow granularity, e.g. 12.5 GHz.

In embodiments, the frequency grid spacing is selected in the group comprising 33.33 GHz, 35 GHz, 40 GHz and 45 GHz.

In an embodiment, the spectral width of the occupied band is lower than or equal to 30 GHz.

The invention also provides a configurable filtering device adapted for filtering a WDM optical signal, the configurable filtering device comprising:

- an input section for receiving a WDM optical signal, wherein the WDM optical signal comprises a plurality of, e.g. at least five, adjacent spectral components, each spectral component having a central frequency arranged on a regular frequency grid and an occupied band, wherein a spectral width of the occupied band is smaller than the frequency grid spacing so as to leave an unoccupied band every time between the occupied bands of two adjacent spectral components of the WDM optical signal,

- a filtering section comprising a plurality of configurable filter slot boundaries that are spaced from one another, wherein two adjacent filter slot boundaries are spaced by a filter slot width corresponding every time to an integer multiple of a predefined spectral granularity of the configurable filtering device, wherein the filtering section is adapted to generate a plurality of optical filters each affecting a spectral slot defined between two adjacent filter slot boundaries, wherein the frequency grid spacing of the regular frequency grid differs by more than 2% from any integer multiple of the spectral granularity, and wherein the filter slot boundaries of the filtering device are configured so as to arrange a respective one of the filter slot boundaries within each unoccupied band between the occupied bands of two adjacent spectral components of the WDM optical signal, and

- an output section for transmitting the WDM optical signal filtered by the filtering section.

According to embodiments, such a filtering device may comprise one or more of the features below.

In an embodiment, the configurable filtering device comprises a Wavelength Selective Switch comprising a liquid-crystal display device arranged as controlled light-switching element.

In an embodiment, the configurable filtering device is configured as a channel power equalizer, wherein an attenuation of each optical filter of the configurable filtering device is configured so as to output the WDM optical signal with a substantially flat spectrum.

Such a filtering device may be employed in a variety of optical network elements, in particular for metropolitan, wide-area or long-haul transmissions.

In an embodiment, the invention also provides an optical communication system comprising a terrestrial link, a submarine link and the configurable filtering device arranged at an interface between the terrestrial link and the submarine link.

According to embodiments, such a communication system may comprise one or ) more of the features below.

In an embodiment, the optical communication system further comprises a plurality of the configurable filtering devices arranged along the terrestrial link, wherein the terrestrial link comprises a plurality of spans that connect the plurality of configurable filtering devices in series.

In an embodiment, at least one filter slot boundary of a second one of the filtering devices is arranged within an unoccupied band at a different frequency from the filter slot boundary of a first one of the filtering devices arranged within the same unoccupied band.

An idea at the basis of the invention is to configure a spectral filter, e.g. for power equalization, so that the most significant part of the spectral power density of the optical signal to be filtered, e.g. equalized, remains near the center of the configurable filter slots.

Aspects of the invention are based on the idea of using WDM signals having wavelength channels aligned on a non-standard frequency grid for communications that achieve a satisfactory compromise between transmission capacity and physical degradations.

Aspects of the invention are based on the idea of achieving a specific adaptation of the channel spacing as function of the distance that an optical connection has to bridge.

**Brief description of the drawings**

These and other aspects of the invention will be apparent from and elucidated with reference to the embodiments described hereinafter, by way of example, with reference to the drawings.

Figure 1 is a schematic representation of the spectral power density (SPD) of a modulated optical signal that can be used in a WDM optical transmission.

Figure 2 is a schematic representation of a WDM optical signal.

Figure 3 is a schematic representation of a configurable filter that can be used to equalize the WDM optical signal of Fig. 2.

Figure 4 is a schematic representation of a plurality of filter slots that may be configured in the configurable filter of Fig. 3.

Figure 5 is a schematic representation of a transfer function of the configurable filter of Fig. 3 in an embodiment.

Figure 6 is a schematic representation of a transfer function of the configurable filter of Fig. 3 in another embodiment.

Figures 7 and 8 are schematic representations of optical communication systems, in which the configurable filter of Fig. 3 can be used.

**Detailed description of the embodiments**

WDM optical transmissions rely on the superposition of a plurality of modulated optical signals on a same propagation medium, e.g. an optical fiber. The respective modulated optical signals occupy different portions of the optical spectrum, known as wavelength channels, so that separating the individual modulated signals remains possible at the destination through filtering techniques. A practical implementation of WDM optical signals relies on regular frequency grids, i.e. wavelength channels that are mutually spaced by a constant step known as the grid spacing. Such regular grids generally provide good results in terms of capacity, ease of implementation and interoperability.

The spectral occupation of an individual modulated optical signal depends on a number of parameters, including clock-rate and modulation scheme. Thus, the grid spacing and the modulation characteristics must be selected and dimensioned consistently. Qualitatively, the transmission capacity of a WDM link is inversely proportional to the grid spacing. However, transmission reach generally evolves in the same manner as the grid spacing, because impairments such as cross-talk and non-linear effects tend to increase as a smaller grid spacing is selected. Accordingly, a significant aspect of optical network design consists in selecting appropriate frequency grids and signal modulation features as a function of a desired transmission capacity and transmission reach.

In that context, a need exists in optical communication systems for methods and devices suitable for filtering WDM optical signals arranged on a variety of frequency grids, in particular for performing power equalization of the WDM signal.

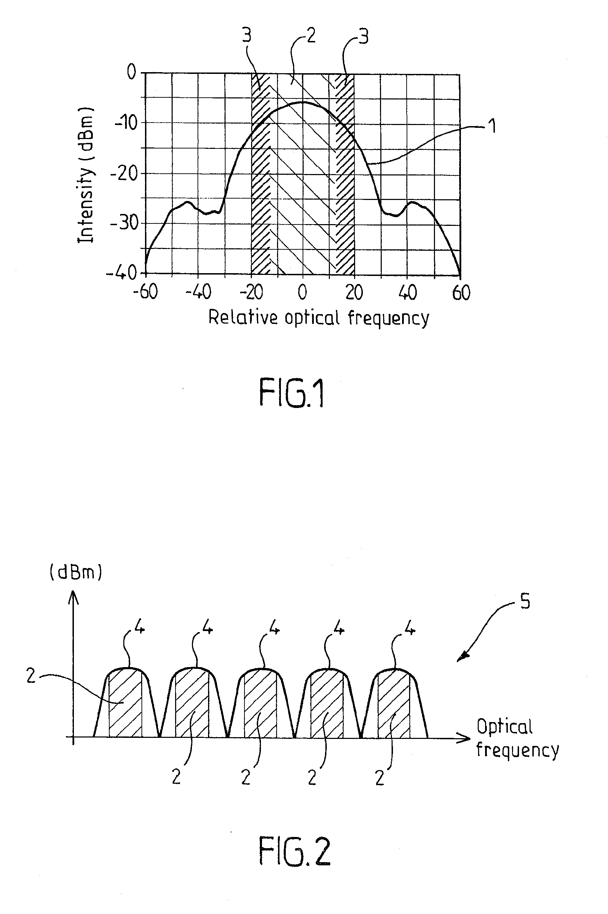

Turning to Figure 1, the spectral characteristics of a modulated optical signal are briefly illustrated. Fig. 1 is a graph showing the spectral power density (SPD) of the modulated signal in dBm as a function of the optical frequency in GHz. The origin of the frequency axis is set on the central frequency of the wavelength channel, e.g. somewhere in the C-band. The signal illustrated in Fig. 1 is a 112 Gb/s quadrature phase-shift keyed signal with polarization-division multiplexing (PDM-QPSK), which can be used in an optical transmission system with coherent receivers. The graph 1 shows the measured SPD as a function of frequency. The hatched area 2 represents the actual occupied band of the signal, i.e. a range of frequency where the spectral density that carries the actual information detectable by the coherent receiver is confined. The hatched areas 3 on both sides of area 2 correspond to a less significant part of the SPD that would also fall into a wavelength channel corresponding to 40GHz grid spacing, in which each channel has a +/-20 GHz dedicated band around its central frequency. Thus, while the 112 Gb/s PDM-QPSK channel seems to spread over more than 0.3 nm (equivalent to 37.5 GHz) when observed with an optical spectrum analyzer, in practice its actual occupied band 2 seen by the coherent receiver is about 18 GHz to 20 GHz.

Usually, the occupied band of the modulated signal may be defined as about 70% of the baud rate of the modulated signal. In an embodiment, the occupied band of the modulated signal is measured as the electrical bandwidth of a coherent optical receiver which is computed by an electronic post-processing unit of the coherent optical receiver by using a constant modulus algorithm (see G. Charlet, J. Renaudier, H. Mardoyan, P. Tran, O. B. Pardo, F. Verluise, M. Achouche, A. Boutin, F. Blache, J. Dupuy, and S. Bigo, ) "Transmission of 16.4-bit/s Capacity Over 2550 km Using PDM QPSK Modulation Format and Coherent Receiver," J. Lightwave Technol. **27**, 153-157, 2009).

Figure 2 illustrates on a larger frequency band the SPD of a WDM signal 5 formed of a plurality of mutually adjacent wavelength channels arranged on a regular grid of frequencies. Each wavelength channel is illustrated by a signal envelope 4 that corresponds to a theoretical band of frequency dedicated to the modulated optical signal carried in the wavelength channel and an occupied band 2 having the same meaning as in Fig. 1. For the sake of illustration, the WDM signal in Fig. 2 may be formed of a plurality of the modulated signals illustrated in Fig. 1 arranged on a 40-GHz spaced grid.

It may be necessary in instances to equalize the power of the individual channels in the WDM signal 5. For instance, in an optical transmission system that connects directly a terrestrial WDM transmission link to a submarine WDM transmission link so that the WDM signal 5 goes transparently from the terrestrial part to the submarine part and vice versa. The transmission engineering rules are very different in the terrestrial domain and in the submarine domain. Indeed, the submarine domain mainly relies on point-to-point transmission with quite short fiber spans and with a lot of cascaded optical amplifiers along the line. To prevent the gain tilt and ripple cumulated along this long cascade of amplifiers from impacting too much the transmitted channels, a lot of attention is paid to the appropriate gain flatness of these amplifiers over the spectral transmission window. Such an optimization makes these amplifiers very expensive. In that context, if the WDM comb is not spectrally flat enough at the input of the submarine link, this can degrade the global transmission reach and/or imply additional costly optical amplifiers with shorter spans along the submarine link. On the other hand, the flatness of the WDM optical amplifiers in the terrestrial domain is generally less optimized. So in the terrestrial network, one or more Channel Power Equalizers (CPE) may be arranged along the link, e.g. regularly up to one every four fiber spans.

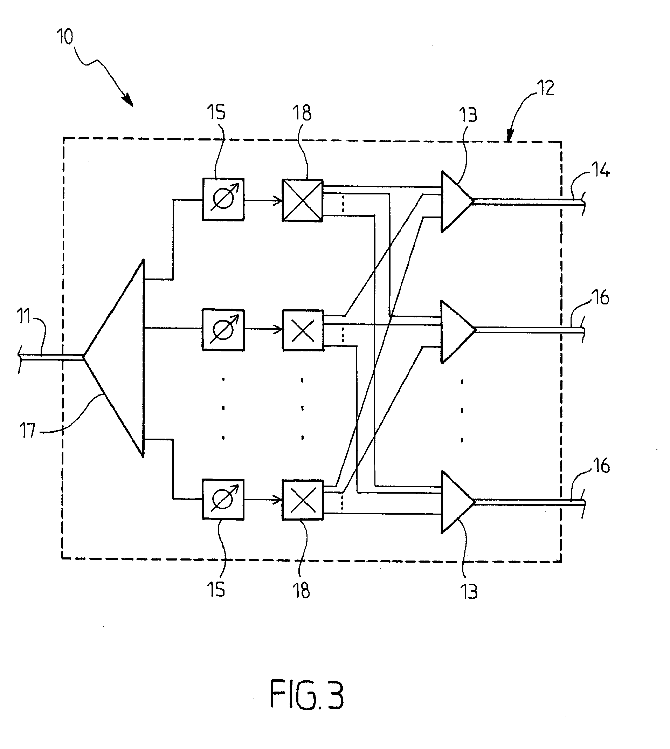

Turning to Fig.3, a wavelength-agile Channel Power Equalizer 10 suitable for filtering WDM signals on a variety of frequency grids will be described. The CPE 10 comprises an input fiber 11, a Wavelength Selective Switch (WSS) 12 and an output fiber 14. The fibers 11 and 14 are intended to be connected to the optical link upstream and downstream of the CPE 10. The WSS 12 is a flex-grid® device available from Finisar Corporation, a company incorporated in the USA. The WSS includes a configurable liquid-crystal display adapted to generate a plurality of filter slots with configurable boundaries. It provides dynamic control of frequency slot center frequency at 6.25 GHz resolution and slot ) width at 12.5 GHz resolution. More details about the structure and operation of the flex-grid® WSS 12 are described in WO-A-2005047942 or in "Advances in Liquid Crystal on Silicon Wavelength Selective Switching" Frisken, S. Optical Fiber Communication and the National Fiber Optic Engineers Conference, 2007. OFC/NFOEC 2007 (Digital Object Identifier: 10.1109/OFC.2007.4348956).

Similarly the WSS 12 can be implemented as a TrueFlex® device available from JDSU, a company incorporated in California, USA. This device also uses a configurable liquid-crystal matrix suitable to generate a plurality of filter slots with configurable boundaries.

Fig. 3 depicts the functional components of the WSS 12 operated as a Channel Power Equalizer. A single output port 14 is used, whereas the other output ports 16 of the WSS remain unused. The WDM signal input through the input fiber 11 is separated by a wavelength demultiplexer stage 17 into a plurality of spectral components that are each internally sent to a dedicated attenuating component 15. Each spectral component is contained in a configurable band that has a width equal to an integer number of the 12.5 GHz resolution. In addition, the center frequency of all bands is selectable in accordance with the 6.25 GHz resolution. The WSS 12 makes it possible to apply independent power attenuation to each spectral component that is sent to a dedicated attenuating component 15. A switching stage 18 makes it possible to select one or more output ports to which the individually attenuated spectral component is sent. For each output port, a wavelength multiplexer stage 13 recombines the individually attenuated spectral components for further WDM transmission, i.e. through the output fiber 14 only in the present case. Structurally, the attenuating components 15 and switching stage 18 are implemented by a liquid-crystal display device.

In a preferred embodiment, the CPE 10 is implemented as a Wavelength Blocker having a single WDM input and a single WDM output.

The width of each configurable band may be configured by appropriate programming of the Wavelength Blocker or the WSS 12. An optimized configuration principle will now be explained in relation to an example.

Consider for the sake of illustration using the CPE 10 of Fig. 3 for the WDM signal 5 with 40 GHz grid spacing. The smaller common multiple of 40 and 12.5 is 200. This means that the WSS 12 with 12.5 GHz granularity can achieve filtering, e.g. power equalization, of a group of five 40 GHz-spaced adjacent channels occupying 200 GHz in total by using a group of sixteen unit slots each occupying 12.5 GHz. There remains to ) decide how the unit slots should be grouped to define filter slots that match as closely as possible the individual wavelength channels. In doing this, it must be kept in mind that physical impairments may be caused by non-perfect filter transfer functions, especially at the edges of the filter slots. Especially if the edges of a filter slot get too close to the center of the wavelength channel carrying the most meaningful information, large penalties are induced on the channel. Furthermore, this would result in a quite coarse attenuation spectral granularity without efficient compensation of the residual channel power divergence within the 200 GHz-slot comprising five 40 GHz-spaced wavelength channels.

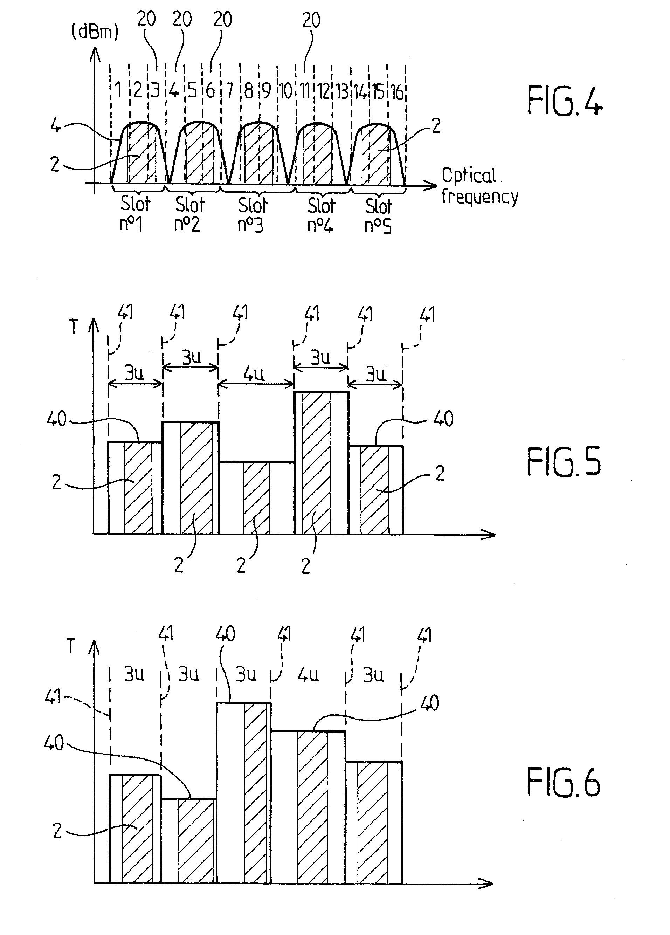

It is proposed to take benefit from the less significant parts of the signal SPD, such as areas 3 of Fig. 1, to arrange the edges of the filter slots on those less significant parts of the signal SPD for all the wavelength channels 4 making up the transmitted WDM signal 5. This may result in defining filter slots that do not all have the same width. This is illustrated in Figures 4, 5 and 6.

Figure 4 is a theoretical representation of sixteen unit filter slots 20, e.g. the 12.5 GHz-wide slots mentioned above, that span a total frequency band in which five adjacent wavelength channels 4 with equal channel spacing are arranged, e.g. the 40 GHz-wide channels mentioned above. The occupied band 2 within each wavelength channels is also depicted by hatching.

Figure 4 shows an irregular distribution of the filter slots that ensures that no occupied band 2 is impacted by a filter slot boundary, i.e. the filter slot boundaries are outside all occupied bands 2. It shows that the filter slot n°3 spans 4 unit slots of the WSS 12 while the other filter slots n°1, n°2, n°4 and n°5 correspond each to only 3 of the unit slots. Thus, the most relevant part of the SPD of all the channels 4 always remains near the center of the corresponding filter slot. The edges of two adjacent channels 4 may sometimes spread over the same unit slot of the WSS 12, for instance at the edges of channels n°2 and n°3 in Figure 4. This implies that for some wavelength channels, the center and the edge of the SPD might experience slightly different attenuations. Nevertheless this is not an issue for the quality of transmission since the edge does not carry meaningful information.

Figure 5 is an idealized view of the power transfer function T of the WSS 12 using the filter slots defined in Figure 4, with filter slot boundaries shown at numeral 41. Namely, in each filter slot 40, the transfer function is flat and provides an attenuation that can be set independently form all other filter slots. Typically, the difference in attenuation from one slot to another is of the order of 1 dB. The actual attenuation levels shown on Figure 5 are arbitrary for the sake of illustration. In practice, the attenuation levels in CPE 10 can be configured by measuring the signal level as a function of frequency at the input of the CPE device 10 and setting the slot attenuation in proportion to the measured level.

Figure 6 shows another example of a filter slot arrangement that satisfies the above principles. It shows that the filter slot n°4 spans 4 unit slots of the WSS 12 while the other filter slots n°1, n°2, n°3 and n°5 correspond each to only 3 of the unit slots.

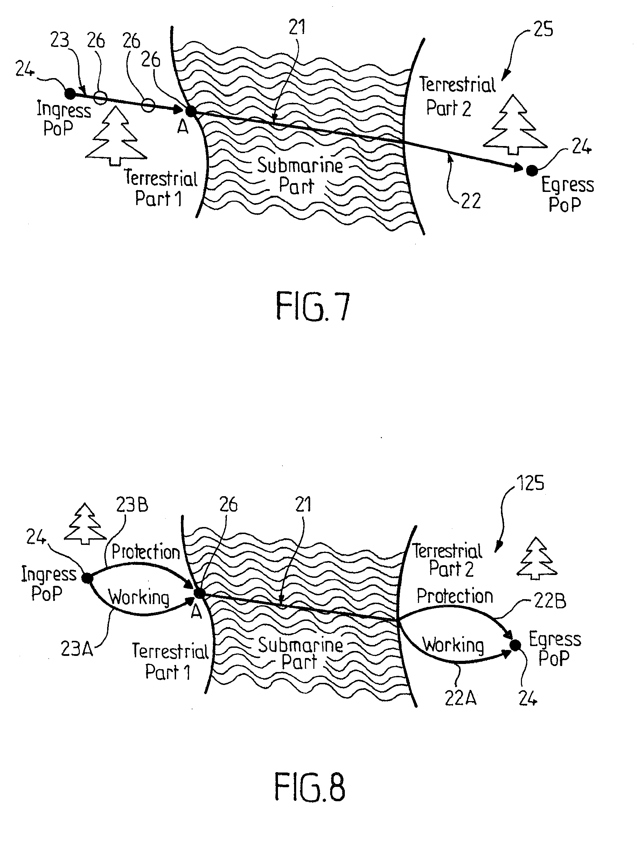

Figure 7 shows a hybrid optical link 25 that connects directly two Points-of-Presence (PoP) 24 through a first terrestrial part 23, a submarine part 21, which is the longest par, and a second terrestrial part 22. Two CPEs 26 are arranged along the first terrestrial part 23 to ensure a very flat spectrum at the entry of submarine part 21. The CPEs 26 may be implemented with the device of Fig. 3. Since plural CPEs 26 are cascaded and since multiple arrangements are suitable for the filter slot boundaries, as shown in Fig.5 and Fig. 6 it is preferred that different arrangements are configured in the successive CPEs 26. Namely, the filter slots defined in Fig. 5 may be employed in the first CPE while the filter slots defined in Fig. 6 may be employed in the second CPE.

If a higher number of CPEs are cascaded, it is also possible to systematically shift the filter slots from one CPE to the next CPE, e.g. in a cyclic way. For instance if the filter slot widths are defined as {3u, 3u, 4u, 3u, 3u} in the first CPE, where u is the unit slot of the WSS, then the following configuration could be used: {3u, 3u, 3u, 4u, 3u} in the second CPE. These configurations are satisfactory in that the filter slot boundaries do not fall into the occupied bands of the channels, as shown on figures 5 and 6.

Optionally, for additional CPEs, the following configurations could be further used: {3u, 3u, 3u, 3u, 4u} in the third one, {4u, 3u, 3u, 3u, 3u} in the fourth one and so on. These are less satisfactory configurations since some of the slot boundaries graze the occupied bands (see figure 4).

Such cyclic shift would relax some optical filtering issues for some channels where the edge of the occupied band falls close to the edge of the possible filter slots. Indeed, when crossing several CPEs, such situation may impact the occupied band 2 of the channel due to the approximate definition of the occupied band 2. Thus, a cyclic permutation of the filter slots avoids having always the same channel experience a more critical optical filtering.

Figure 8 shows another embodiment of a hybrid optical link 125. Elements similar to those of Fig. 7 are designated by the same numeral. The hybrid optical link 125 is supplemented with 1+1 protection in the terrestrial parts 22 and 23 for cable failures are more frequent in the terrestrial part than in the submarine domain. Namely, the terrestrial links are duplicated along two disjoint paths A and B. The two paths in parallel carry the same information and one of them is selected just at the junction point A before going through the submarine link 21 and at the destination PoP 24. A 1x2 fast optical switch (not shown) can make this selection by switching on the second link 22B or 23B in parallel in case of failure on the primary link 22A or 23A that it was initially connected to. Within that system, a CPE 26 arranged in point A before the submarine link 21 is useful to equalize, in terms of spectral flatness, the WDM signal coming from the working link 22A or 23A and the WDM signal originating from the protection link 22B or 23B. Hence, a CPE 26 is arranged at the end of both parallel terrestrial links 23A and 23 B before going through the submarine link 21.

An algorithm for setting the filter slot boundaries in a systematic manner will now be described.

The input parameters of the algorithm are: the channel spacing (Dfch), the width of occupied band around each channel (Dfr), the WSS resolution (DfWSS), the central frequencies ($f_i$) of the wavelength channels and the number of channels in the WDM comb (N). The central optical frequency of the channel number "i" is:

$$f_i = (i * Dfch + Dfch/2).$$

The filter slot allocation method has been illustrated above with Dfch=40 GHz and DfWSS=12.5 GHz. Numerous different filter slot allocations are possible. Advantageously, the method should provide an interval as large as possible [$f_i$ - Dfr/2 GHz, $f_i$ + Dfr/2 GHz] around the central frequency $f_i$ of each wavelength channel. The algorithm below establishes an optimized filter slot distribution.

Firstly a first set of optical frequencies is defined as:
Edges[i]={i*Dfch} for $0 \leq i \leq$ N+1, where "i" is an integer number.

Then a second set of optical frequencies is defined as:

QuantizedEdges={Round(Edges[i]/DfWSS)} for $0 \leq i \leq$ N+1, where the function Round(x) rounds the number x toward the nearest integer.

The filter slot n°i defined between the lower optical frequency QuantizedEdges[i-1]*DfWSS and the upper optical frequency QuantizedEdges[i]*DfWSS is a candidate slot to filter the channel n°i since the width between these two bounds is by definition a multiple of DfWSS.

The next step consists in checking that the edges of these filter slots are in the less meaningful spectral intervals in between each pair of adjacent channels. This means that the filter slot allocation should respect:

$$QuantizedEdges[i]*DfWSS \in [f_{i-1}+Dfr/2, \quad f_i-Dfr/2]$$
whatever the integer i in the interval [1, N].

By applying this algorithm, the following irregular allocation of filter slots was obtained for N=120 channels with Dfch=40 GHz, DfWSS=12.5 GHz and Dfr =30 GHz:
{3, 3, 4, 3, 3, 3, 3, 4, 3, 3, 3, 4, 3, 3, 3, 4, 3, 3, 3, 3, 4, 3, 3, 3, 3, 4, 3, 3, 3, 3, 4, 3, 3, 3, 4, 3, 3, 3, 3, 4, 3, 3, 3, 4, 3, 3, 3, 3, 4, 3, 3, 3, 4, 3, 3, 3, 3, 4, 3, 3, 3, 3, 4, 3, 3, 3, 4, 3, 3, 3, 3, 4, 3, 3, 3, 3, 4, 3, 3, 3, 4, 3, 3, 3, 3, 4, 3, 3, 3, 4, 3, 3, 3, 3, 4, 3, 3, 3, 3, 4, 3, 3, 3, 3, 4, 3, 3, 3, 3, 4, 3, 3, 3, 3, 4, 3, 3},
where the filter slot width is expressed in DfWSS units, e.g. 3 or 4 times 12.5 GHz.

In this example, 30 GHz is the maximum possible value for Dfr. Beyond that value, it is not possible to define an irregular allocation of filter slots compliant with the numerical parameters.

This method can be applied to other configurations. For instance with N=137, Dfch=35 GHz, DfWSS=12.5 GHz and Dfr=25 GHz, the following result is obtained:
{3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3, 2, 3, 3, 3, 3}.

Here, 25 GHz is the maximum possible value for Dfr. Beyond that value, it is not possible to define an irregular allocation of filter slots compliant with the numerical parameters.

Although the above embodiments relate to a WDM signal entirely made of wavelength channels carried on a regular frequency grid, it should be appreciated that the filtering method can be used with other types of WDM signals, e.g. signals including a first plurality of channels arranged on a first regular grid of optical frequencies and a second plurality of channels arranged on a second grid of optical frequencies, where the second grid is regular with a different spacing from the first grid or where the second grid is irregular. More complex WDM signals with a third plurality of optical components, a fourth plurality of optical components and so on, may be used as well. For each plurality of spectral components, filter slot boundaries of the filtering device should be configured so as to arrange a respective one of the filter slot boundaries within each unoccupied band between the occupied bands of two adjacent spectral components of the plurality.

The methods described hereinabove may be executed through the use of dedicated hardware as well as hardware capable of executing software in association with appropriate software. When provided by a processor, the corresponding functions may be provided by a ) single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

**Claims**

1. A method for filtering a WDM optical signal, the method comprising:

   - sending a WDM optical signal to a configurable filtering device (10, 26),
   wherein the WDM optical signal (5) comprises a plurality of adjacent spectral components (4), each spectral component having a central frequency arranged on a regular frequency grid and an occupied band (2), wherein a spectral width of the occupied band is smaller than the frequency grid spacing so as to leave an unoccupied band every time between the occupied bands (2) of two adjacent spectral components (4) of the WDM optical signal (5),
   wherein the configurable filtering device (10, 26) has a spectral granularity (20) and a plurality of configurable filter slot boundaries (41) that are spaced from one another, wherein two adjacent filter slot boundaries are spaced by a filter slot width corresponding every time to an integer multiple of the spectral granularity (20), wherein the configurable filtering device is adapted to generate a plurality of optical filters (40) each affecting a spectral slot defined between two adjacent filter slot boundaries, wherein the frequency grid spacing of the regular frequency grid differs by more than 2% from any integer multiple of the spectral granularity, and
- configuring the filter slot boundaries (41) of the filtering device (10, 26) so as to arrange a respective one of the filter slot boundaries within each unoccupied band between the occupied bands (2) of two adjacent spectral components of the WDM optical signal.

2. The method according to claim 1, further comprising configuring an attenuation of each optical filter (40) of the configurable filtering device so as to output the WDM optical signal with a substantially flat spectrum with less than 0.5dB residual power divergence between the spectral components.

3. The method according to claim 1 or 2, wherein the spectral granularity of the configurable filtering device is smaller than a difference between the frequency grid spacing and the spectral width of the occupied band.

4. The method according to any one of claims 1 to 3, further comprising:

    - sending the WDM optical signal to a second configurable filtering device (26) connected in series with the first configurable filtering device (26),
    wherein the second configurable filtering device has a spectral granularity and a plurality of configurable filter slot boundaries (41) that are spaced from one another, wherein two adjacent filter slot boundaries are spaced by a filter slot width corresponding every time to an integer multiple of the spectral granularity, wherein the configurable filtering device is adapted to generate a second plurality of optical filters (40) each affecting a spectral slot defined between two configurable filter slot boundaries, and
    - configuring the filter slot boundaries (41) of the second filtering device so as to arrange a respective one of the filter slot boundaries within each unoccupied band between the occupied bands of two adjacent spectral components of the WDM optical signal,
    wherein at least one filter slot boundary (41) of the second filtering device is arranged within an unoccupied band at a different frequency from the filter slot boundary (41) of the first filtering device arranged within the same unoccupied band.

5. The method according to claim 4, wherein the second configurable filtering device has the same spectral granularity as the first configurable filtering device.

6. The method according to claim 5, wherein at least one unoccupied band has a larger width than the spectral granularity, wherein the filter slot boundary (41) of the second filtering device (26) arranged within the unoccupied band is shifted by an integer multiple of the spectral granularity (20) with respect to the filter slot boundary (41) of the first filtering device (26) arranged within the unoccupied band.

7. The method according to any one of claims 1 to 6, wherein the configurable filtering device comprises a Wavelength Selective Switch (12) comprising a liquid-crystal display device arranged as controlled light-switching element.

8. The method according to any one of claims 1 to 7, wherein the spectral granularity is 12.5 GHz.

9. The method according to any one of claims 1 to 8, wherein the spectral width of the occupied band is lower than or equal to 30 GHz.

10. A configurable filtering device (10, 26) adapted for filtering a WDM optical signal, the configurable filtering device comprising:

    - an input section (11) that receives a WDM optical signal (5), wherein the WDM optical signal comprises a plurality of adjacent spectral components (4), each spectral component having a central frequency arranged on a regular frequency grid and an occupied band (2), wherein a spectral width of the occupied band is smaller than the frequency grid spacing so as to leave an unoccupied band every time between the occupied bands of two adjacent spectral components of the WDM optical signal,
    - a filtering section (12) comprising a plurality of configurable filter slot boundaries (41) that are spaced from one another, wherein two adjacent filter slot boundaries are spaced by a filter slot width corresponding every time to an integer multiple of a predefined spectral granularity of the configurable filtering device, wherein the frequency grid spacing of the regular frequency grid differs by more than 2% from any integer multiple of the predefined spectral granularity, wherein the filtering section generates a plurality of optical filters (40) each affecting a spectral slot defined between two adjacent filter slot boundaries, and wherein the filter slot boundaries (41) of the filtering device are configured so as to arrange a respective one of the filter slot boundaries within each unoccupied band between the occupied bands of two adjacent spectral components of the WDM optical signal, and
- an output section (14) that transmits the WDM optical signal filtered by the filtering section.

**11.** The configurable filtering device according to claim 10, wherein the configurable filtering device comprises a Wavelength Selective Switch (12) comprising a liquid-crystal display device arranged as controlled light-switching element.

**12.** The configurable filtering device according to claim 10 or 11 configured as a channel power equalizer, wherein an attenuation of each optical filter (40) of the configurable filtering device is configured so as to output the WDM optical signal with a substantially flat spectrum.

**13.** An optical communication system (25, 125) comprising a terrestrial link (23), a submarine link (21) and the configurable filtering device (26) in accordance with any one of claims 10 to 12 arranged at an interface (A) between the terrestrial link and the submarine link.

**14.** The optical communication system (25, 125) according to claim 13, further comprising a plurality of the configurable filtering devices (26) arranged along the terrestrial link (23), wherein the terrestrial link comprises a plurality of spans that connect the plurality of configurable filtering devices in series.

**15.** The optical communication system according to claim 14,
wherein at least one filter slot boundary (41) of a second one of the filtering devices (26) is arranged within an unoccupied band at a different frequency from the filter slot boundary (41) of a first one of the filtering devices arranged within the same unoccupied band.

**Amended claims in accordance with Rule 137(2) EPC.**

**1.** A method for filtering a WDM optical signal, the method comprising:

- sending a WDM optical signal to a configurable filtering device (10, 26),
wherein the WDM optical signal (5) comprises a plurality of adjacent spectral components (4), each spectral component having a central frequency arranged on a regular frequency grid , wherein the configurable filtering device (10, 26) has a spectral granularity (20) and a plurality of configurable filter slot boundaries (41) that are spaced from one another, wherein two adjacent filter slot boundaries are spaced by a filter slot width corresponding every time to an integer multiple of the spectral granularity (20), wherein the configurable filtering device is adapted to generate a plurality of optical filters (40) each affecting a spectral slot defined between two adjacent filter slot boundaries, wherein the frequency grid spacing of the regular frequency grid differs by more than 2% from any integer multiple of the spectral granularity, and
**characterized in that**
- each spectral component of the WDM optical signal has an occupied band (2), wherein a spectral width of the occupied band is smaller than the frequency grid spacing so as to leave an unoccupied band every time between the occupied bands (2) of two adjacent spectral components (4) of the WDM optical signal (5), and that the method further comprises,
- configuring the filter slot boundaries (41) of the filtering device (10, 26) so as to arrange a respective one of the filter slot boundaries within each unoccupied band between the occupied bands (2) of two adjacent spectral components of the WDM optical signal.

**2.** The method according to claim 1, further comprising configuring an attenuation of each optical filter (40) of the configurable filtering device so as to output the WDM optical signal with a substantially flat spectrum with less than 0.5dB residual power divergence between the spectral components.

**3.** The method according to claim 1 or 2, wherein the spectral granularity of the configurable filtering device is smaller than a difference between the frequency grid spacing and the spectral width of the occupied band.

**4.** The method according to any one of claims 1 to 3, further comprising:

- sending the WDM optical signal to a second configurable filtering device (26) connected in series with the first configurable filtering device (26),
wherein the second configurable filtering device has a spectral granularity and a plurality of configurable filter slot boundaries (41) that are spaced from one another, wherein two adjacent filter slot boundaries are spaced by a filter slot width corresponding every time to an integer multiple of the spectral granularity, wherein the configurable filtering device is adapted to generate a second plurality of optical filters (40) each affecting a spectral slot defined between two configurable filter slot boundaries, and
- configuring the filter slot boundaries (41) of the second filtering device so as to arrange a respective one of the filter slot boundaries within each unoccupied band between the occupied bands of two adjacent spectral components of the WDM optical signal,
wherein at least one filter slot boundary (41) of the second filtering device is arranged within an unoccupied band at a different frequency from the filter slot boundary (41) of the first filtering device arranged within the same unoccupied band.

5. The method according to claim 4, wherein the second configurable filtering device has the same spectral granularity as the first configurable filtering device.

6. The method according to claim 5, wherein at least one unoccupied band has a larger width than the spectral granularity, wherein the filter slot boundary (41) of the second filtering device (26) arranged within the unoccupied band is shifted by an integer multiple of the spectral granularity (20) with respect to the filter slot boundary (41) of the first filtering device (26) arranged within the unoccupied band.

7. The method according to any one of claims 1 to 6, wherein the configurable filtering device comprises a Wavelength Selective Switch (12) comprising a liquid-crystal display device arranged as controlled light-switching element.

8. The method according to any one of claims 1 to 7, wherein the spectral granularity is 12.5 GHz.

9. The method according to any one of claims 1 to 8, wherein the spectral width of the occupied band is lower than or equal to 30 GHz.

10. A configurable filtering device (10, 26) adapted for filtering a WDM optical signal, the configurable filtering device comprising:

- an input section (11) that receives a WDM optical signal (5), wherein the WDM optical signal comprises a plurality of adjacent spectral components (4), each spectral component having a central frequency arranged on a regular frequency grid
- a filtering section (12) comprising a plurality of configurable filter slot boundaries (41) that are spaced from one another, wherein two adjacent filter slot boundaries are spaced by a filter slot width corresponding every time to an integer multiple of a predefined spectral granularity of the configurable filtering device, wherein the frequency grid spacing of the regular frequency grid differs by more than 2% from any integer multiple of the predefined spectral granularity, wherein the filtering section generates a plurality of optical filters (40) each affecting a spectral slot defined between two adjacent filter slot boundaries, and
- an output section (14) that transmits the WDM optical signal filtered by the filtering section,

**characterized in that** each spectral component has an occupied band (2), wherein a spectral width of the occupied band is smaller than the frequency grid spacing so as to leave an unoccupied band every time between the occupied bands of two adjacent spectral components of the WDM optical signal, and the filter slot boundaries (41) of the filtering device are configured so as to arrange a respective one of the filter slot boundaries within each unoccupied band between the occupied bands of two adjacent spectral components of the WDM optical signal.

11. The configurable filtering device according to claim 10, wherein the configurable filtering device comprises a Wavelength Selective Switch (12) comprising a liquid-crystal display device arranged as controlled light-switching element.

12. The configurable filtering device according to claim 10 or 11 configured as a channel power equalizer, wherein an attenuation of each optical filter (40) of the configurable filtering device is configured so as to output the WDM optical signal with a substantially flat spectrum.

13. An optical communication system (25, 125) comprising a terrestrial link (23), a submarine link (21) and the configurable filtering device (26) in accordance with any one of claims 10 to 12 arranged at an interface (A) between the terrestrial link and the submarine link.

14. The optical communication system (25, 125) according to claim 13, further comprising a plurality of the configurable filtering devices (26) arranged along the terrestrial link (23), wherein the terrestrial link comprises a plurality of spans that connect the plurality of configurable filtering devices in series.

15. The optical communication system according to claim 14, wherein at least one filter slot boundary (41) of a second one of the filtering devices (26) is arranged within an unoccupied band at a different frequency from the filter slot boundary (41) of a first one of the filtering devices arranged within the same unoccupied band.

FIG.1

FIG.2

FIG.3

FIG.4

FIG.5

FIG.6

FIG.7

FIG.8

Europäisches
Patentamt

European
Patent Office

Office européen
des brevets

## EUROPEAN SEARCH REPORT

Application Number

EP 13 30 6151

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THIERRY ZAMI: "Impact of intra-superchannel spectral constraints on the throughput of the elastic WDM networks", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 March 2012 (2012-03-04), pages 1-3, XP032340038, ISBN: 978-1-4673-0262-3 * the whole document * | 1-15 | INV. H04B10/294 H04J14/02 |
| X | GUOYING ZHANG ET AL: "A Survey on OFDM-Based Elastic Core Optical Networking", IEEE COMMUNICATIONS SURVEYS, IEEE, NEW YORK, NY, US, vol. 15, no. 1, 1 January 2013 (2013-01-01), pages 65-87, XP011493333, ISSN: 1553-877X, DOI: 10.1109/SURV.2012.010912.00123 * page 76, right-hand column, last paragraph - page 78, right-hand column, paragraph 6; figures 14,15,16,17 * | 1-15 | |
| | | | TECHNICAL FIELDS SEARCHED (IPC) |
| | | | H04B H04J |
| A | BERTRAN-PARDO O ET AL: "Insertion of 100Gb/s Coherent PDM-QPSK Channels over Legacy Optical Networks Relying on Low Chromatic Dispersion Fibres", GLOBAL TELECOMMUNICATIONS CONFERENCE, 2009. GLOBECOM 2009. IEEE, IEEE, PISCATAWAY, NJ, USA, 30 November 2009 (2009-11-30), pages 1-6, XP031646444, ISBN: 978-1-4244-4148-8 * the whole document * | 1-15 | |

-/--

The present search report has been drawn up for all claims

| Place of search | Date of completion of the search | Examiner |
|---|---|---|
| The Hague | 29 January 2014 | Roldán Andrade, J |

Europäisches
Patentamt

European
Patent Office

Office européen
des brevets

## EUROPEAN SEARCH REPORT

Application Number

EP 13 30 6151

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/142510 A1 (ZHOU XIANG [US]) 6 June 2013 (2013-06-06) * paragraph [0001] - paragraph [0005] * * paragraph [0035] - paragraph [0042]; figures 1,2,3a,3b,4a * * paragraph [0051]; figure 4b * ----- | 1-15 | |

TECHNICAL FIELDS
SEARCHED (IPC)

The present search report has been drawn up for all claims

| Place of search | Date of completion of the search | Examiner |
|---|---|---|
| The Hague | 29 January 2014 | Roldán Andrade, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 30 6151

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2014

| Patent document cited in search report | Publication date | Patent family member(s) | Publication date |
|---|---|---|---|
| US 2013142510 A1 | 06-06-2013 | NONE | |

EPO FORM P0459

For more details about this annex : see Official Journal of the European Patent Office, No. 12/82